(19) Europäisches Patentamt
European Patent Office
Office européen des brevets

(11) EP 1 818 952 A1

(12) EUROPEAN PATENT APPLICATION

(43) Date of publication:
15.08.2007 Bulletin 2007/33

(51) Int Cl.:
*H01F 7/16* (2006.01)

(21) Application number: 06101494.0

(22) Date of filing: 09.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(71) Applicant: TDK TAIWAN CORP.
Taipei (TW)

(72) Inventor: Chang, Wen-Chia
Yangmei Taoyuan (TW)

(74) Representative: Viering, Jentschura & Partner
Postfach 22 14 43
80504 München (DE)

(54) **Magnetic levitation actuating motor**

(57) A magnetic levitation actuating motor includes a hollow base externally wound with a coil, at least one magnetic element fixedly mounted to at least a free open end of the hollow base, and a magnetizable actuator axially movably disposed in the hollow base. When the coil is supplied with a current to produce a magnetic flux, the magnetizable actuator is temporarily magnetized to produce a magnetic intensity, so that the magnetizable actuator and the magnetic element mutually attract or repulse to displace the magnetizable actuator in the hollow base. When the current supplied to the coil is cut off, the magnetizable actuator can still maintain at a balance point position in the hollow base for a period of time. Therefore, by intermittently supplying current to the coil, the magnetizable actuator can stay at the balance point position over a prolonged time with reduced power consumption.

Fig. 5

**Description**

FIELD OF THE INVENTION

The present invention relates to a magnetic levitation actuating motor, and more particularly to a motor that uses a magnetizable element as an actuating shaft thereof and has the advantages of low power consumption, simplified structure, and fewer components.

BACKGROUND OF THE INVENTION

A voice coil motor (VCM) is often used in many small-scale consumptive electronic products, such as mobile phones and digital cameras, as a short-distance actuating motor. The voice coil motor has the advantages of small volume and low price, and is suitable for use as an axial displacement actuator of a magnetic head or an optical pickup, an auto-focusing actuator for a camera, an actuator for a zoom lens of a camera, etc.

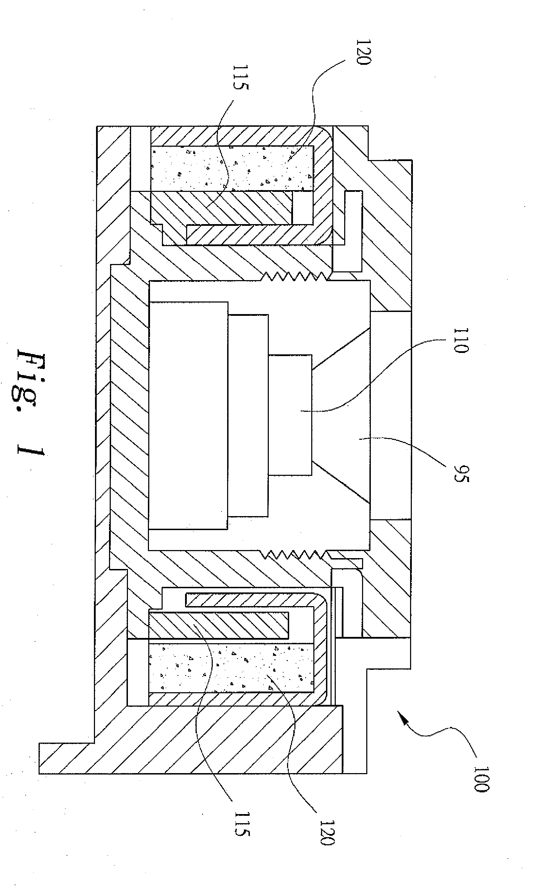

Fig. 1 is a sectioned side view of a conventional voice coil motor 100 used in a conventional camera for auto focusing. As shown, the voice coil motor 100 is internally provided at a shaft thereof with an actuating part 110 having a lens 95 supported thereon. A coil 115 is wound around an outer side of the actuating part 110, and magnets 120 are provided at an outer side of the voice coil motor 100. When the coil 115 is supplied with a current to produce a magnetic field, the actuating part 110 and the external magnets 120 mutually repulse or attract to thereby axially displace the actuating part 110 forward or backward. By controlling the magnitude of current supplied to the coil 115, it is possible to control the magnitude of displacement of the actuating part 110.
The conventional voice coil motor 100 has a relatively large overall volume and includes a lot of components that involve complicate assembling, and therefore requires increased manufacturing cost. Moreover, the voice coil motor 100 is actuated by supplying current to the coil 115, and therefore consumes relatively high power. For those battery-powered small-scale apparatus, such as cameras and mobile phones, this is a problem difficult to overcome.
It is therefore tried by the inventor to develop a completely new type of magnetic levitation actuating motor to eliminate the drawbacks existed in the conventional voice coil motor.

SUMMARY OF THE INVENTION

A primary object of the present invention is to provide a magnetic levitation actuating motor that has fewer components, low power consumption, and reduced volume to enable easy assembling and low manufacturing cost.
To achieve the above and other objects, the magnetic levitation actuating motor of the present invention a hollow base externally wound with a coil, at least one magnetic element fixedly mounted to at least a free open end of the hollow base, and a magnetizable actuator axially movably disposed in the hollow base.
The magnetizable actuator is made of a material that can be magnetized to maintain a magnetic intensity for a predetermined period of time, whereby when the coil is supplied with a current to produce a magnetic flux, the magnetizable actuator is temporarily magnetized to produce a magnetic intensity, so that the magnetizable actuator and the magnetic element mutually attract or repulse to displace the magnetizable actuator in the hollow base. And, when the current supplied to the coil is cut off, the magnetizable actuator can still maintain at a balance point position in the hollow base for a period of time. Therefore, by intermittently supplying the current to the coil, the magnetizable actuator can stay at the balance point position over a prolonged time with reduced power consumption without consuming a high amount of power.

BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a sectioned side view of a conventional voice coil motor;

Fig. 2 is an assembled perspective view of a magnetic levitation actuating motor according to the present invention;

Fig. 3 is an exploded perspective view of the magnetic levitation actuating motor according to the present invention; and

Figs. 4, 5, and 6 are sectioned side views showing the operation of the magnetic levitation actuating motor of the present invention;

## DETAILED DESCRIPTION OF THE PREFERRED EMBODIMENTS

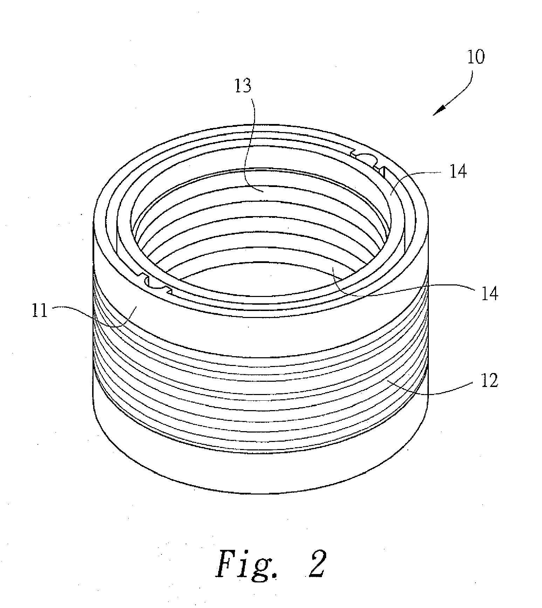

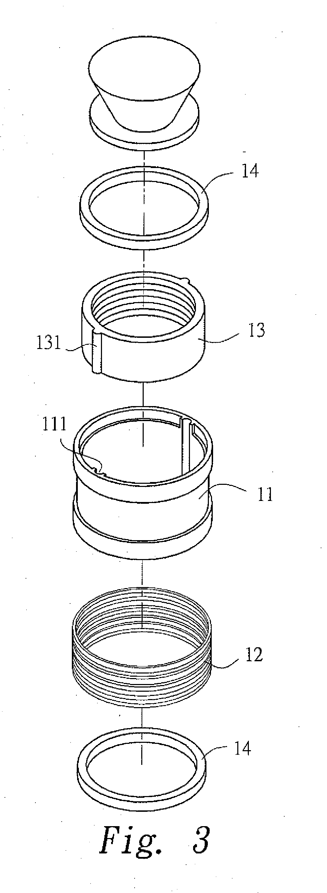

Please refer to Figs. 2 and 3 that are assembled and exploded perspective views, respectively, of a magnetic levitation actuating motor 10 according to the present invention. As shown, the magnetic levitation actuating motor 10 includes a base 11, which is a hollow cylindrical member having two open ends, a coil 12 wound around an outer circumferential surface of the base 11, a magnetizable actuator 13 axially movably disposed in the hollow base 11, and a magnetic element 14, such as a magnet or an electromagnet, fixedly mounted to each of the two open ends of the hollow cylindrical base 11.

The magnetizable actuator 13 is also a hollow cylindrical member made of a magnetizable material, such as plastic magnet, and having female screw threads provided on an inner wall surface thereof for a carried object, such as a camera lens, to screw thereto. A magnetizable material is a material that is magnetized to produce a magnetic field when being positioned in a magnetic field. However, the magnetizable material is not permanently magnetized, and the magnetic field produced by the magnetizable material vanishes after a period of time. The magnetic element 14 is an annular member having an inner diameter similar to that of the magnetizable actuator 13.

Preferably, the base 11 is provided on an inner wall surface with at least one axially extended guide groove 111, and the magnetizable actuator 13 is correspondingly provided on an outer wall surface with at least one guide rib 131 for axially slidably engaging with the guide groove 111 to define a moving direction for the magnetizable actuator 13.

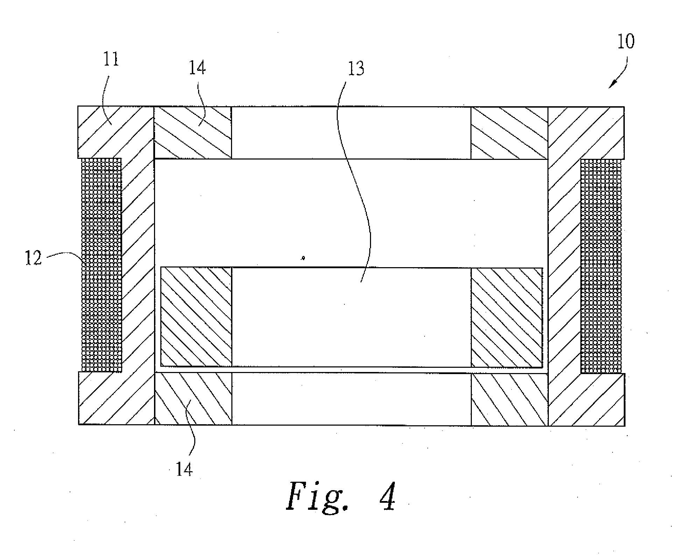

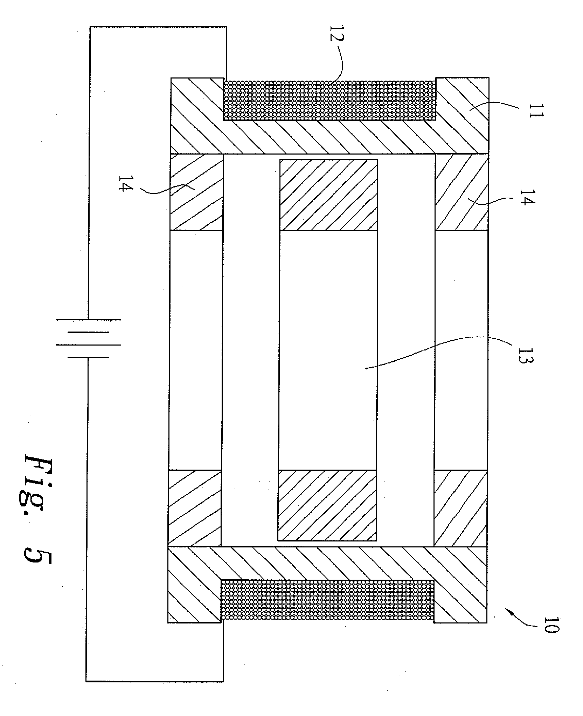

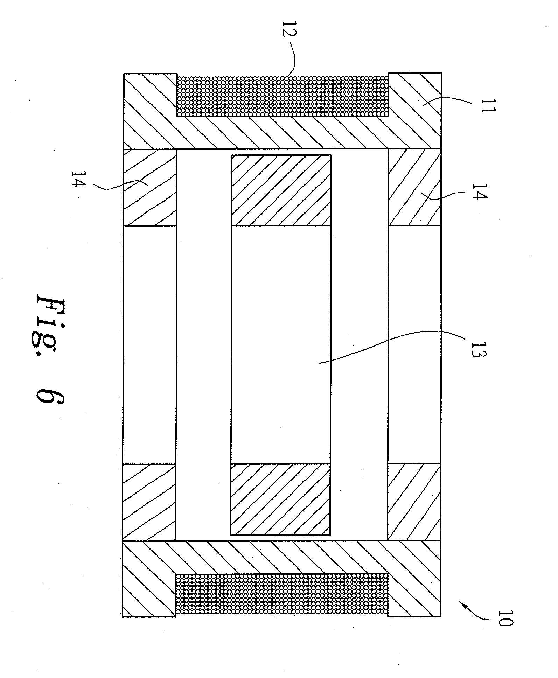

Please refer to Figs. 4, 5, and 6 that are sectioned side views showing the operation of the magnetic levitation actuating motor 10 of the present invention. In Fig. 4, the coil 12 is not supplied with a current, and the magnetizable actuator 13 is not magnetized to produce any magnetic field and is possibly located near a rear end of the base 11. In Fig. 5, the coil 12 is supplied with a current to produce a magnetic flux, which causes the magnetizable actuator 13 to be excited and produce a magnetic intensity. At this point, the magnetizable actuator 13 is pulled or repulsed by the magnetic elements 14 fixedly mounted to the two open ends of the base 11 and thereby guided to axially displace forward or backward in the hollow cylindrical base 11. In Fig. 6, the current supplied to the coil 12 is cut off. At this point, since the magnetic intensity produced by the temporarily magnetized magnetizable actuator 13 would last for a period of time, the magnetizable actuator 13 is kept guided by the two magnetic elements 14 to maintain at a balance point position, which may be, for example, an automatic focusing position.

The magnetic intensity of the magnetized magnetizable actuator 13 vanishes with time. One way for the magnetizable actuator 13 to maintain at a desired position for a prolonged time is to intermittently supply current to the coil 12 to excite the magnetizable actuator 13. In this manner, the magnetic levitation actuating motor 10 of the present invention requires largely reduced power consumption as compared with the conventional voice coil motor that must be continuously supplied with the same current to maintain at the same position.

The magnetic intensity and direction of a magnetizable material may be changed through excitation by an external magnetic flux. Therefore, in the present invention, it is possible to directly change a magnitude and direction of the current on the coil 12 to not only excite the magnetizable actuator 13, but also change a magnitude of displacement of the magnetizable actuator 13 in the hollow base 11. Therefore, the magnetic levitation actuating motor 10 of the present invention can be more easily precisely controlled than the conventional voice coil motor.

The control of the magnetic levitation actuating motor 10 of the present invention is based on the following several principles and equations.

a. The magnetic intensity (m) of the magnetizable actuator 13 after the cutoff of current is a function of time (t), and can be expressed by m(t).

b. The displacement D of the magnetizable actuator 13 due to an external field intensity decay is expressed by $D(d(m(t)/dt)$.

c.

$$D_{optical}=D(d(m(t)/dt|t=T_{holding});$$

where,
$D_{optical}$ is an acceptable displacement of the magnetizable actuator 13; and
$T_{holding}$ is the time period within which the coil 12 does not need to be supplied with current.

d. When the current supplied to the coil 12 is cut off, as shown in Fig. 6, and the magnetizable actuator 13 is displaced to locate at a balance point $Z(F_N(m), F_S(m), W_C)$, then:

$$F_N(m)=F_S(m)+W_C$$

$$\rightarrow (\mu_0/4\pi)x(mxm_1/(h-L-Z)^2)=(\mu_0/4\pi)x(mxm_2/Z^2)+W_c;$$

$$\rightarrow Z\equiv Z(m(t))$$

$$\rightarrow D\equiv D(d(m(t))/dt)$$

where,
m, $m_1$, $m_2$ are magnetic intensity of the magnetizable actuator 13, the magnetic element in front of the magnetizable actuator 13, and the magnetic element behind the magnetizable actuator 13, respectively.

The magnetic levitation actuating motor 10 of the present invention is different from and superior to the prior art for the following reasons:

1. The displacement of the magnetizable actuator 13 could be precisely controlled through the above-mentioned equations.

2. Since it is not necessary to continuously supply current to the coil 12, the magnetic levitation actuating motor 10 of the present invention has power consumption much lower than that of the conventional voice coil motor, and is very practical for use.

The present invention has been described with a preferred embodiment thereof and it is understood that many changes and modifications in the described embodiment can be carried out without departing from the scope and the spirit of the invention that is intended to be limited only by the appended claims.

**Claims**

1. A magnetic levitation actuating motor, comprising:

a hollow base having a coil wound around an outer wall surface thereof;
at least one magnetic element being fixedly mounted to at least a free open end of said hollow base; and
a magnetizable actuator being axially movably disposed in said hollow base and made of a magnetizable material that may be magnetized to produce a magnetic intensity that maintains for a predetermined period of time;

whereby when said coil is supplied with a current to produce a magnetic flux, said magnetizable actuator is excited to produce a magnetic intensity, so that said magnetizable actuator and said at least one magnetic element magnetically attract or repulse each other, enabling said movable magnetizable actuator to axially displace forward or backward in said hollow base, and to maintain at a balance point position in said base within said predetermined period of time when said current supplied to said coil is cut off.

2. The magnetic levitation actuating motor as claimed in claim 1, wherein said base is a hollow cylindrical member,

3. The magnetic levitation actuating motor as claimed in claim 1, wherein said at least one magnetic element is in the number of two, and said two magnetic elements being separately fixedly mounted to two opposite open ends of said hollow base.

4. The magnetic levitation actuating motor as claimed in claim 1, wherein said magnetizable actuator is internally threaded for a lens to screw thereto.

5. The magnetic levitation actuating motor as claimed in claim 1, wherein said magnetic element is a magnet.

6. The magnetic levitation actuating motor as claimed in claim 1, wherein said magnetic element is an electromagnet.

7. The magnetic levitation actuating motor as claimed in claim 1, wherein said hollow base is provided on an inner wall surface with at least one axially extended guide groove, and said magnetizable actuator is correspondingly provided on an outer wall surface with at least one guide rib, such that said at least one guide rib and said at least one guide groove are slidably engaged with each other to guide said movable magnetizable actuator to axially displace forward or backward in said hollow base.

8. The magnetic levitation actuating motor as claimed in claim 1, wherein said coil is intermittently supplied with current, so that said magnetizable actuator is intermittently excited to maintain at a desired position in said hollow base over a prolonged period of time.

9. The magnetic levitation actuating motor as claimed in claim 1, wherein said magnetizable actuator magnetically attracted or repulsed by said at least one magnetic element is maintained at said balance point position in said hollow base based on the following principles and equations:

   a. The magnetic intensity (m) of said magnetizable actuator after the cutoff of current is a function of time (t), and can be expressed by m(t);
   b. The displacement D of the magnetizable actuator due to an external field intensity decay is expressed by D (d(m(t)/dt);
   c.

$$D_{optical}=D(d(m(t)/dt|t=T_{holding});$$

   where,
   $D_{optical}$ is an acceptable displacement of the magnetizable actuator; and
   $T_{holding}$ is the time period within which the coil does not need to be supplied with current; and
   d. When the current supplied to said coil is cut off and said magnetizable actuator has been displaced to locate at a balance point $Z(F_N(m), F_S(m), W_C)$, then:

$$F_N(m)=F_S(m)+W_C$$

$$\rightarrow (\mu_0/4\pi)x(mxm_1/(h-L-Z)^2)=(\mu_0/4\pi)x(mxm_2/Z^2)+W_c;$$

$$\rightarrow Z \equiv Z(m(t))$$

$$\rightarrow D \equiv D(d(m(t))/dt)$$

   where,
   m, $m_1$, $m_2$ are magnetic intensity of said magnetizable actuator, one of said at least one magnetic element located in front of said magnetizable actuator, and another one of said at least one magnetic element located behind said magnetizable actuator, respectively.

Fig. 1

*Fig. 2*

*Fig. 3*

Fig. 4

Fig. 5

EP 1 818 952 A1

Fig. 6

EP 1 818 952 A1

**European Patent Office**

**EUROPEAN SEARCH REPORT**

Application Number

EP 06 10 1494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 306 207 A (TADA ET AL) 15 December 1981 (1981-12-15) * column 1, line 60 - column 2, line 3 * * column 4, line 8 - column 5, line 52; figures 2-5 * | 1-8 | INV. H01F7/16 |
| X | US 3 202 886 A (KRAMER NATHAN R) 24 August 1965 (1965-08-24) * column 1, line 55 - column 3, line 53; figures 1-3 * * column 4, line 3 - line 15 * | 1-8 | |
| A | US 2005/036776 A1 (YASUDA SADAYOSHI ET AL) 17 February 2005 (2005-02-17) * paragraph [0046] - paragraph [0047]; figure 1 * * paragraph [0129] * | 4,7 | |
| | | | TECHNICAL FIELDS SEARCHED (IPC) H01F H02K G02B F16C H02N |

The present search report has been drawn up for all claims

| Place of search | Date of completion of the search | Examiner |
|---|---|---|
| The Hague | 21 July 2006 | Teske, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

## ANNEX TO THE EUROPEAN SEARCH REPORT
## ON EUROPEAN PATENT APPLICATION NO.

EP 06 10 1494

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2006

| Patent document cited in search report | | Publication date | Patent family member(s) | | Publication date |
|---|---|---|---|---|---|
| US 4306207 | A | 15-12-1981 | NONE | | |
| US 3202886 | A | 24-08-1965 | NONE | | |
| US 2005036776 | A1 | 17-02-2005 | JP 2005064887 | A | 10-03-2005 |

EPO FORM P0459